(19) Europäisches Patentamt
European Patent Office
Office européen des brevets

(11) Veröffentlichungsnummer: **0 094 652**
**B1**

(12) # EUROPÄISCHE PATENTSCHRIFT

(45) Veröffentlichungstag der Patentschrift: **07.01.88**

(51) Int. Cl.⁴: **F 24 D 19/10**, F 24 D 3/00, F 23 J 15/00

(21) Anmeldenummer: **83104770.9**

(22) Anmeldetag: **14.05.83**

(54) **Heizeinrichtung mit Abgas-Wärmepumpe.**

(30) Priorität: **18.05.82 DE 3218636**

(43) Veröffentlichungstag der Anmeldung: **23.11.83 Patentblatt 83/47**

(45) Bekanntmachung des Hinweises auf die Patenterteilung: **07.01.88 Patentblatt 88/1**

(84) Benannte Vertragsstaaten: **AT BE CH DE FR GB IT LI LU NL SE**

(56) Entgegenhaltungen:
**EP - A - 0 001 272**
**DE - A - 2 822 808**
**DE - A - 2 839 541**
**DE - A - 3 009 385**
**US - A - 4 289 730**

**Römpps Chemie-Lexikon, Frankische Verlagshandlung Stuttgart, 7. Auflage, S. 2042 und 2043.**

**Die Akte enthält technische Angaben, die nach dem Eingang der Anmeldung eingereicht wurden und die nicht in dieser Patentschrift enthalten sind.**

(73) Patentinhaber: **Mayer VARIABLE ENERGIESYSTEME GmbH, Daverdener Strasse 44, D-2815 Langwedel (DE)**

(72) Erfinder: **Reith, Hnas-Jürgen, Clüversborstel 43, D-2724 Reessum (DE)**

(74) Vertreter: **Bolte, Erich, Dipl.-Ing. et al, Patentanwälte Dipl.-Ing. Hans Meissner Dipl.-Ing. Erich Bolte Hollerallee 73, D-2800 Bremen 1 (DE)**

**EP 0 094 652 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Heizeinrichtung, mit einem Heizkessel, insbesondere für Öl- oder Gasbefeuerung, und mit einer Wärmepumpe, deren Verdampfer die Abgase des Heizkessels zuführbar sind, wobei ein Neutralisationsaggregat mit einem Neutralisations-Behälter vorgesehen ist, der ein Erdalkalimetalloxid als Neutralisationsmittel enthält, wobei an dem Verdampfer der Wärmepumpe gebildetes säurehaltiges Kondensat durch diesen Neutralisations-Behälter hindurchleitbar ist.

Eine Heizeinrichtung mit Neutralisation von säurehaltigem Kondensat ist aus der US-A-4 289 730 bekannt. Bei der dort beschriebenen Anordnung wird das zu behandelnde Kondensat aber von oben her in das Neutralisationsaggregat eingeführt und auch wieder von der Oberseite dieses Aggregates abgeführt. Im Inneren des Neutralisationsaggregates sind eine Reihe von nebeneinander im Abstand angebrachten Trennwänden vorgesehen, und zwar in der Weise, dass der Neutralisations-Behälter dort zickzackförmig durchlaufen wird. Zum Auffangen der umgesetzten Rückstände sind dort keine Massnahmen vorgesehen, vielmehr wird die gesamte zugeführte Flüssigkeit nach dem Durchlaufen des Neutralisationsaggregates in das Abwassersystem eingeleitet.

Sofern daher der Vorrat an Neutralisationsmittel, wobei es sich dort um Kalk handelt, nicht ausreichend gross ist, gelangt auch unbehandeltes Kondensat in das Abwasser, ohne dass dies sofort ersichtlich ist. Wenn der Vorrat an Neutralisationsmittel bei der dort beschriebenen Anordnung erschöpft ist, muss das gesamte Neutralisationsaggregat einschliesslich des Neutralisations-Behälters, der Trennwände usw. ausgewechselt werden, ohne dass ein Nachfüllen des Neutralisationsmittels bei der dort beschriebenen Anordnung möglich ist.

Aus der DE-A-2 822 808 ist eine Vorrichtung zum Kühlen von Kamingasen bekannt, bei der ein Filter vorgesehen ist, der zur Neutralisierung der Säure und der Schwefelprodukte des Kondensates dient, das in dem dort beschriebenen Heizungssystem anfällt. Der Filter ist dort als Kalkmilchfilter ausgebildet, so dass in gleicher Weise wie bei der ober beschriebenen Anordnung Gips anfällt, wenn Schwefelsäure in dem Kondensat umgesetzt wird. Der Filter selbst ist dort lediglich schematisch angegeben, ohne dass sich irgendwelche Einzelheiten über den Aufbau des Filters finden.

Aus dem Fachbuch Römpps Chemie-Lexikon, 7. Auflage 1974, Seiten 2024/2043, ist es bekannt, dass es eine Vielzahl von Einsatzmöglichkeiten für Magnesiumoxid gibt, die auf den verschiedensten technischen Gebieten liegen. Unter anderem ist dort erwähnt, dass sich Magnesiumoxid zur Absorption von Schwefeldioxid verwenden lässt. Die Neutralisation von Schwefelsäure selbst wird nicht erwähnt.

Aufgabe der Erfindung ist es, eine Heizeinrichtung der eingangs genannten Art so zu verbessern, dass das Neutralisationsaggregat einen kompakten und leicht zu wartenden Aufbau besitzt, so dass die damit ausgerüstete Heizeinrichtung einen umweltfreundlichen Betrieb gewährleistet.

Die erfindungsgemässe Lösung besteht darin, eine Heizeinrichtung der eingangs genannten Art so auszubilden, dass der Neutralisations-Behälter als Neutralisationsmittel Magnesiumoxid enthält, dass eine Kondensatleitung an der Unterseite in den Neutralisations-Behälter mündet, dass das Kondensat von unten nach oben durch das Neutralisationsmittel im Neutralisations-Behälter hindurchleitbar ist, und dass an der Unterseite des Neutralisations-Behälters ein Auffangbehälter für Rückstände angeordnet ist.

Mit der erfindungsgemässen Heizeinrichtung wird die Aufgabe in zufriedenstellender Weise gelöst, wobei die Verwendung von Magnesiumoxid als Neutralisationsmittel den Vorteil erbringt, dass nur eine geringe Menge an Magnesiumoxid für eine Heizperiode erforderlich ist. Das in der erfindungsgemässen Heizeinrichtung entstehende Neutralisationsprodukt ist sehr gut wasserlöslich und bereitet bei der Einleitung in das Abwassersystem keinerlei Schwierigkeiten. Der sonst bei der Verwendung von Kalk erforderliche Abtransport des Reaktionsproduktes ist bei der erfindungsgemässen Heizeinrichtung nicht erforderlich.

In Weiterbildung der erfindungsgemässen Heizeinrichtung ist vorgesehen, dass der Neutralisations-Behälter länglich ausgebildet ist und in seinem unteren Bereich einen ausreichenden Vorrat an Neutralisationsmittel, insbesondere in stückiger oder granulierter Form für eine komplette Heizperiode enthält. Dabei kommt man für eine Wohneinheit mit einer Menge in der Grössenordnung von 1 kg pro Heizperiode aus, so dass keine grossen Lagerkapazitäten erforderlich sind.

In Weiterbildung der erfindungsgemässen Heizeinrichtung ist vorgesehen, dass die Kondensationsleitung mit ihrem Endstück durch den Boden des Neutralisations-Behälters hindurch nach oben bis in das Neutralisationsmittel vorsteht.

Bei einer speziellen Ausführungsform der erfindungsgemässen Heizeinrichtung ist vorgesehen, dass der Auffangbehälter für Rückstände abnehmbar und trichterförmig nach unten auslaufend gestaltet ist und dass die Kondensatleitung an der tiefsten Stelle des Auffangbehälters in diesen eintritt sowie durch diesen hindurch bis in den Bereich des Neutralisations-Behälters reicht. Dadurch ist die Wartung in einfacher Weise möglich. Ferner ist sichergestellt, dass das ankommende Kondensat mit Sicherheit durch das Neutralisationsmittel hindurch geleitet wird.

Besonders zweckmässig ist es, wenn bei der erfindungsgemässen Heizeinrichtung der Auffangbehälter vom Neutralisations-Behälter durch einen Siebboden abgeteilt ist. Damit wird die Trennung der beiden Behälter in einfacher Weise gewährleistet und zugleich sichergestellt, dass

Rückstände leicht in den Auffangbehälter gelangen können.

In Weiterbildung der erfindungsgemässen Heizeinrichtung ist vorgesehen, dass auf der Kondensat-Ablaufseite des Neutralisationsaggregates eine Anzeigevorrichtung für saure Rückstände im neutralisierten Kondensat angeordnet ist, die vorzugsweise einen Anzeigebehälter mit Sichtfenster bzw. durchsichtiger Wand sowie einen darin angeordneten Säure/Base-Indikator aufweist, der vom Kondensat durchflossen wird. Auf diese Weise lässt sich der Betriebszustand der Heizeinrichtung in einfacher Weise überprüfen und gegebenenfalls Neutralisationsmittel nachfüllen, wenn dieses verbraucht ist.

Bei einer speziellen Ausführungsform der erfindungsgemässen Heizeinrichtung ist vorgesehen, dass als Säure/Base-Indikator harzhaltiges Material Verwendung findet, wie Ionenaustauscherharz (Polystyrol-Harz) in Kombination mit einem Indikator.

Ferner erweist es sich als zweckmässig, wenn bei der erfindungsgemässen Heizeinrichtung der Anzeigebehälter auf der Oberseite des Neutralisations-Behälters angeordnet und mit einer Überwurfmutter verankert ist. Auf diese Weise ist die Anzeigevorrichtung zu Montage- und Wartungszwecken leicht zugänglich.

In Weiterbildung der erfindungsgemässen Heizeinrichtung ist vorgesehen, dass zwischen dem Anzeigebehälter und dem Neutralisations-Behälter eine Siebwandung angeordnet ist.

In Weiterbildung der erfindungsgemässen Heizeinrichtung ist vorgesehen, dass das Neutralisationsaggregat aussen an der Heizeinrichtung angebracht ist, und zwar auf einer Ebene, die tiefer liegt als die Ebene, in welcher der Verdampfer der Wärmepumpe und eine zugeordnete Kondensat-Auffangschale liegen. Auf diese Weise kann das Kondensat durch das vorhandene Gefälle den Neutralisations-Behälter von unten nach oben durchströmen.

Ein weiterer Vorteil der erfindungsgemässen Heizeinrichtung ist darin zu sehen, dass das Neutralisationsmittel eine Art Depotwirkung besitzt, so dass der Heizungsbetrieb über die gesamte Heizungsperiode aufrechterhalten werden kann, ohne dass das Neutralisationsaggregat zur Beseitigung von Schwefelsäure ausgewechselt zu werden braucht. Auch die aufgrund der chemischen Reaktion zurückbleibenden Substanzen können auf kleinem Raum untergebracht werden und lassen sich in einfacher Weise aus dem Auffangbehälter entfernen. Insgesamt ist die erfindungsgemässe Heizeinrichtung somit wartungsfreundlich und erfüllt eine umweltfreundliche Funktion.

Die Erfindung wird nachstehend anhand eines Ausführungsbeispiels und unter Bezugnahme auf die Zeichnungen näher erläutert.

Es zeigen

Fig. 1 eine Heizeinrichtung mit Abgas-Wärmepumpe in schematisierter Prinzipdarstellung;

Fig. 2 eine Einzelheit der Heizeinrichtung, nämlich ein Neutralisationsaggregat, in Seitenansicht, teilweise im Schnitt und in vergrössertem Massstab;

Fig. 3 eine Seitenansicht der Heizvorrichtung;

Fig. 4 einen Grundriss der Heizeinrichtung;

Fig. 5 eine Darstellung entsprechend Fig. 3 als Schemadarstellung;

Fig. 6 die Heizeinrichtung bei abgenommener Abgas-Wärmepumpe.

Aus der Schemadarstellung in Fig. 1 ist der beispielhafte Prinzipaufbau einer Heizeinrichtung ersichtlich, die aus einem Heizkessel 10 mit Ölbrenner 11 sowie einer angeschlossenen Abgas-Wärmepumpe 12 besteht. Diese wiederum enthält einen Verdampfer 13, einen Kältekreis 14 mit Kompressor 15 und Verflüssiger 16. Letzterer ist an eine Rücklaufleitung 17 der im einzelnen nicht dargestellten Heizungsanlage (Heizkörper) angeschlossen.

Das Heizungs-Rücklaufwasser wird demnach zuerst durch die Abgas-Wärmepumpe 12 (Verflüssiger 16) hindurchgeleitet, hier aufgeheizt und tritt sodann in den Heizkessel 10 ein. Von dem Heizkessel 10 führt eine Vorlaufleitung 18 zu der Heizungsanlage zurück.

Bei gemeinsamem Betrieb des Heizkessels 10 und der Abgas-Wärmepumpe 12 werden die heissen Abgase des Heizkessels 10 über eine Abgasleitung 19 dem Verdampfer 13 der Abgas-Wärmepumpe 12 zugeführt. Den Abgasen wird Frischluft über eine Frischluftleitung 20 beigemischt. In den Verdampfer 13 tritt demnach ein Abgas-Frischluft-Gemisch ein.

In dem Verdampfer 13 entsteht Abgas-Kondensat, welches in einer Kondensat-Auffangschale 21 unterhalb des Verdampfers 13 aufgefangen und gesammelt wird. Das Kondensat ist säurehaltig. Insbesondere enthält es einen beträchtlichen Anteil an Schwefelsäure. Um eine gefahrlose Beseitigung des Kondensats zu ermöglichen, wird dieses neutralisiert.

Zu diesem Zweck ist die Heizeinrichtung mit einem Neutralisationsaggregat 22 ausgerüstet. Dieses ist im einzelnen in Fig. 2 gezeigt.

In einem langgestreckten, vorzugsweise zylindrischen, aufrechten Neutralisations-Behälter 23 findet ein angemessener Vorrat eines Neutralisationsmittels 24 Aufnahme. Das Neutralisationsmittel 24 besteht aus granuliertem Magnesiumoxid (MgO). Das Kondensat wird im wesentlichen drucklos durch das Neutralisationsmittel 24 hindurchgeleitet, wobei die Schwefelsäure mit Magnesiumoxid in folgender Weise reagiert:

$$MgO + H_2SO_4 \rightarrow MgSO_4 + H_2O$$

Durch die Neutralisation entstehen demnach lösliche Salze (Magnesiumsulfat). Diese sammeln sich als Nassschlamm im unteren Bereich des Neutralisations-Behälters 23. Dieser ist bei dem gezeigten Ausführungsbeispiel mit einem unteren Siebboden 25 ausgestattet, durch den der Rückstandsschlamm nach unten hindurchtritt in einen Auffangbehälter 26. Aus diesem kann der Rückstand entweder durch Abnehmen des Auffangbehälters 26 oder alternativ durch Spülen mit Wasser entfernt werden.

Das Kondensat wird über eine Kondensatleitung 27 von unten her in den Neutralisations-Behälter 23 eingeleitet. Dieser ist, wie noch zu erläutern sein wird, auf einem Niveau unterhalb der Kondensat-Auffangschale 21 installiert, so dass das Kondensat durch Gefälle den Neutralisations-Behälter 23 von unten nach oben durchströmen kann. Die Kondensatleitung 27 (Rohr bzw. Schlauch) ist im vorliegenden Fall durch den Auffangbehälter 26 hindurchgeführt und ragt mit einem Endstück 28 bis in das Granulat (Neutralisationsmittel 24). Dadurch ist sichergestellt, dass das Kondensat unmittelbar in das Neutralisationsmittel 24 geleitet wird.

Im Bereich einer oberen Austrittsseite des (neutralisierten) Kondensats aus dem Neutralisations-Behälter 23 ist dieser mit einem Austrittsstutzen 29 versehen. Dieser ist mit einem Aussengewinde versehen, auf dem eine mit Innengewinde ausgebildete Überwurfmutter 30 sitzt. Diese dient als Verschluss des Neutralisations-Behälters 23 und im vorliegenden Fall zum Festsetzen eines Anzeigebehälters 31 auf dem Austrittsstutzen 29.

Der vorgenannte Anzeigebehälter 31 ist mit einem Flansch 32 versehen, der Teil einer eintrittsseitigen Siebwandung 33 ist. Der Flansch 32 wird durch die mit einem Gegenflansch ausgebildete Überwurfmutter 30 erfasst und gegen das Ende des Austrittsstutzens 29 abdichtend gedrückt.

Der Anzeigebehälter 31 ist wenigstens teilweise mit einer durchsichtigen Wandung, z. B. aus einem klarsichtigen Kunststoff, ausgebildet. Innerhalb des Anzeigebehälters 31 befindet sich ein Anzeigemittel, welches eine Veränderung erfährt, insbesondere einen Farbumschlag, wenn der Säuregehalt in dem neutralisierten Kondensat einen kritischen Wert überschreitet. Vorzugsweise findet zu diesem Zweck ein granuliertes Harz 34 Aufnahme in dem Anzeigebehälter 31, und zwar beispielsweise Polystyrol-Harz (Ionenaustauscherharz, insbesondere Kationenaustauscherharz) mit einem Säure/Base-Indikator. Eine eventuell unzureichende Funktion des Neutralisationsaggregats 22 wird somit durch den Anzeigebehälter 31 bzw. durch das Harz 34 als Anzeigemittel durch Farbveränderung angezeigt. Das neutralisierte Kondensat strömt zu diesem Zweck durch das Harz 34 hindurch.

An die Oberseite des Anzeigebehälters 31 schliesst eine Kondensatableitung 35 an, die beispielsweise in einen Abwasserkanal führt.

Das Neutralisationsmittel 24 im Neutralisations-Behälter 23 besteht aus dem in Wasser unlöslichen Erdalkalimetalloxid Magnesiumoxid. Zusätzlich kann das Neutralisationsmittel 24 Bindemittel sowie Restmengen mit katalytischer und beschleunigender Wirkung enthalten.

Das vorstehend als Ausführungsbeispiel beschriebene Neutralisationsaggregat 22 ist an leicht zugänglicher Stelle der Heizeinrichtung angebracht. Fig. 4 zeigt einen vereinfachten Grundriss der Heizeinrichtung gemäss einer bevorzugten Ausführungsform. Wie ersichtlich, ist ein Neutralisations-Behälter 23 aussen an einer Verkleidung 36 angebracht. Daneben ist im vorliegenden Fall ein Ersatz-Neutralisations-Behälter 37 abnehmbar montiert. Die Neutralisations-Behälter 23 bzw. 37 können mit einfachen, lösbaren Halterungen befestigt sein. Jeweils spätestens zum Ende einer Heizperiode wird der angeschlossene Neutralisations-Behälter 23 abgenommen, durch den Ersatz-Neutralisations-Behälter 37 ersetzt. Das «verbrauchte» Neutralisationsaggregat 22 wird zweckmässigerweise zentral überarbeitet, nämlich gereinigt und neu befüllt.

Die hier dargestellte Heizeinrichtung ist in ihrer Gesamtheit in besonderer Weise konstruktiv aufgebaut. Die zum Heizkessel 10 einerseits und zur Abgas-Wärmepumpe 12 andererseits gehörenden Aggregate sind in jeweils getrennten, gesonderten Traggestellen 38, 39 montiert, nämlich in rechteckigen Traggestellen 38 und 39 von mindestens gleicher Grundfläche. Die Traggestelle 38, 39 bestehen aus rahmenartig zusammengesetzten Profilen, insbesondere Winkelprofilen. Aufrechte Stützen 40 bzw. 41 sind jeweils durch obere und untere Längsholme 42 und 43 bzw. 44 und 45 sowie durch Querholme 46 miteinander verbunden. An den so ausgebildeten Traggestellen 38 und 39 ist im Bereich der Vorderseite, der Seitenflächen sowie oben die Verkleidung 36 angebracht, und zwar ebenfalls mit einer Teilung entsprechend dem Aufbau der Traggestelle 38, 39. Diese sind bei dem vorliegenden Ausführungsbeispiel übereinander angeordnet. Die einander benachbarten Längsholme 43 und 44 sowie Querholme 46 sind lösbar, nämlich durch Schraubverbindungen 47, miteinander verbunden. Um die Einheit mit der Abgas-Wärmepumpe 12 von der Einheit mit dem Heizkessel 10 zu trennen, werden lediglich die Schraubverbindungen 47 gelöst und Verbindungsleitungen zwischen den beiden Einheiten getrennt. Danach kann das obere Traggestell 38 mit der Abgas-Wärmepumpe 12 abgenommen und beispielsweise zu Reparaturzwecken abtransportiert werden. Der Heizkessel bleibt unverändert in Betrieb.

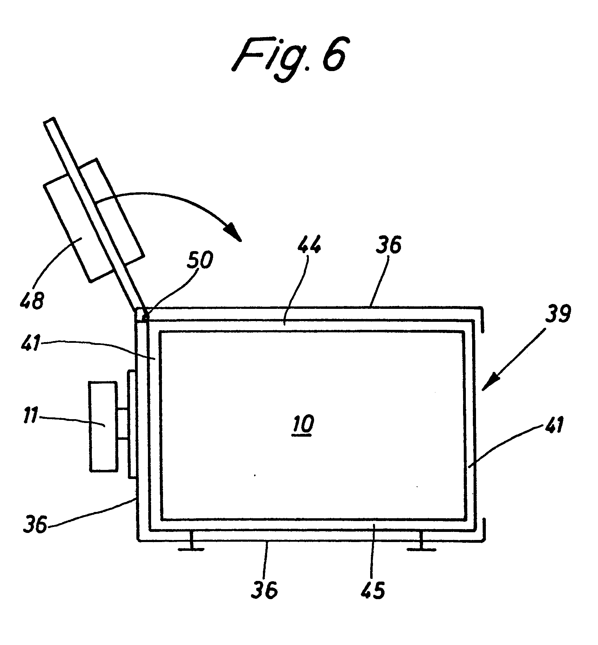

Die Verkleidung 36, z. B. aus Blech, ist im Bereich der Trennung zwischen den Traggestellen 38 und 39 ebenfalls unterteilt. Im Bereich der Vorderseiten ist eine besondere Lösung vorgesehen. Eine Steuereinheit 48 für Heizkessel 10 und Abgas-Wärmepumpe 12 befindet sich im Bereich des oberen Traggestells 38, und zwar eingebaut in eine Vorderwand 49 der Verkleidung 36. Dieser Teil, nämlich die Vorderwand 49, ist von dem übrigen Teil der zum Traggestell 38 gehörenden Verkleidung 36 lösbar und über eine Scharnierverbindung 50 mit dem unteren Traggestell 39 verbunden. Zum Abnehmen des oberen Traggestells 38 mit Abgas-Wärmepumpe 12 wird die Vorderwand 49 mit der Steuereinheit 48 nach vorn geschwenkt (Position in Fig. 6). Nunmehr kann das obere Traggestell 38 abgehoben werden. Anschliessend wird die Vorderwand 49 in die Ausgangsstellung (aufrechte Position) zurückgeklappt. Die Steuereinheit 48 bleibt demnach mit dem Heizkessel 10 bzw. dessen Einrichtungen in Verbindung und kann

auch bei abgenommener Abgas-Wärmepumpe 12 betrieben werden.

Wie aus der schematischen Darstellung in Fig. 3 ersichtlich, ist das Neutralisationsaggregat 22 im unteren Bereich der Heizeinrichtung angeordnet, nämlich ausserhalb der Verkleidung 36 im Bereich des Traggestells 39 für den Heizkessel 10. Dadurch ergibt sich ein Niveauunterschied gegenüber der Kondensat-Auffangschale 21 im Bereich des oberen Traggestells 38. Eine Schlauchleitung 51 führt innerhalb der Heizeinrichtung zu der Kondensatleitung 27 am unteren Ende des Neutralisations-Behälters 23. Hierdurch ergibt sich die von unten nach oben gerichtete Strömung des Kondensats in dem Neutralisations-Behälter 23.

**Patentansprüche**

1. Heizeinrichtung, mit einem Heizkessel (10), insbesondere für Öl- oder Gasbefeuerung, und mit einer Wärmepumpe (12), deren Verdampfer die Abgase des Heizkessels (10) zuführbar sind, wobei ein Neutralisationsaggregat (22) mit einem Neutralisations-Behälter (23) vorgesehen ist, der ein Erdalkalimetalloxid als Neutralisationsmittel (24) enthält, wobei an dem Verdampfer der Wärmepumpe (12) gebildetes säurehaltiges Kondensat durch diesen Neutralisations-Behälter (23) hindurchgeleitet ist, dadurch gekennzeichnet, dass der Neutralisations-Behälter (23) als Neutralisationsmittel (24) Magnesiumoxid enthält, dass eine Kondensatleitung (27) an der Unterseite in den Neutralisations-Behälter (23) mündet, dass das Kondensat von unten nach oben durch das Neutralisationsmittel (24) im Neutralisations-Behälter (23) hindurchleitbar ist, und dass an der Unterseite des Neutralisations-Behälters (23) ein Auffangbehälter (26) für Rückstände angeordnet ist.

2. Heizeinrichtung nach Anspruch 1, dadurch gekennzeichnet, dass der Neutralisations-Behälter (23) länglich ausgebildet ist und in seinem unteren Bereich einen ausreichenden Vorrat an Neutralisationsmittel (24), insbesondere in stückiger oder granulierter Form für eine komplette Heizperiode enthält.

3. Heizeinrichtung nach Anspruch 1 oder 2, dadurch gekennzeichnet, dass die Kondensatleitung (27) mit ihrem Endstück (28) durch den Boden des Neutralisations-Behälters (23) hindurch nach oben bis in das Neutralisationsmittel (24) vorsteht.

4. Heizeinrichtung nach einem der Ansprüche 1–3, dadurch gekennzeichnet, dass der Auffangbehälter (26) für Rückstände abnehmbar und trichterförmig nach unten auslaufend gestaltet ist und dass die Kondensatleitung (27) an der tiefsten Stelle des Auffangbehälters (26) in diesen eintritt sowie durch diesen hindurch bis in den Bereich des Neutralisations-Behälters (23) reicht.

5. Heizeinrichtung nach einem der Ansprüche 1–4, dadurch gekennzeichnet, dass der Auffangbehälter (26) vom Neutralisations-Behälter (23) durch einen Siebboden (25) abgeteilt ist.

6. Heizeinrichtung nach einem der Ansprüche 1–5, dadurch gekennzeichnet, dass auf der Kondensat-Ablaufseite des Neutralisationsaggregates (22) eine Anzeigevorrichtung für saure Rückstände im neutralisierten Kondensat angeordnet ist, die vorzugsweise einen Anzeigebehälter (31) mit Sichtfenster bzw. durchsichtiger Wand sowie einen darin angeordneten Säure/Base-Indikator aufweist, der vom Kondensat durchflossen wird.

7. Heizeinrichtung nach Anspruch 6, dadurch gekennzeichnet, dass als Säure/Base-Indikator harzhaltiges Material Verwendung findet, wie Ionenaustauscherharz (Polystyrol-Harz) in Kombination mit einem Indikator.

8. Heizeinrichtung nach Anspruch 6 oder 7, dadurch gekennzeichnet, dass der Anzeigebehälter (31) auf der Oberseite des Neutralisations-Behälters (23) angeordnet und mit einer Überwurfmutter (30) verankert ist.

9. Heizeinrichtung nach einem der Ansprüche 6–8, dadurch gekennzeichnet, dass zwischen dem Anzeigebehälter (31) und dem Neutralisations-Behälter (23) eine Siebwandung (33) angeordnet ist.

10. Heizeinrichtung nach einem der Ansprüche 1–9, dadurch gekennzeichnet, dass das Neutralisationsaggregat (22) aussen an der Heizeinrichtung angebracht ist, und zwar auf einer Ebene, die tiefer liegt als die Ebene, in welcher der Verdampfer der Wärmepumpe (12) und eine zugeordnete Kondensat-Auffangschale (27) liegen.

**Claims**

1. Heating installation, with a boiler (10), in particular an oil- or gas-fired boiler and with a heat pump (12), to the evaporator of which the waste gases of the boiler (10) can be supplied, a neutralisation unit (22) with a neutralisation container (23) being provided, which contains an alkaline earth metal oxide as the neutralising agent (24), condensate containing acid formed at the evaporator of the heat pump (12) being able to be passed through this neutralisation container (23), characterised in that the neutralisation container (23) contains magnesium oxide as the neutralising agent (24), that a condensate pipe (27) opens on the under side into the neutralisation container (23), that the condensate can be passed in an upwards direction through the neutralising agent (24) in the neutralisation container (23) and that a collecting container (26) for residues is located on the under side of the neutralisation container (23).

2. Heating installation according to Claim 1, characterised in that the neutralisation container (23) is constructed in an elongated manner and in its lower region contains a supply of neutralising agent (24), in particular in the form of lumps or granules, which is sufficient for a complete heating period.

3. Heating installation according to Claim 1 or 2, characterised in that the condensate pipe (27) projects by its end piece (28) through the base of the neutralisation container (23) in an upwards direction into the neutralising agent (24).

4. Heating installation according to one of Claims 1 to 3, characterised in that the collecting

container (26) for residues can be removed and is constructed in the form of a funnel tapering downwards and that the condensate pipe (27) enters the collecting container (26) at the deepest point of the latter and extends through the latter into the region of the neutralisation container (23).

5. Heating installation according to one of Claims 1 to 4, characterised in that the collecting container (26) is divided from the neutralisation container (23) by a perforated base (25).

6. Heating installation according to one of Claims 1 to 5, characterised in that located on the condensate outlet side of the neutralisation unit (22) is an indicating device for acid residues in the neutralised condensate, which preferably comprises an indicating container (31) with a viewing window or transparent wall and an acid/base indicator located therein, through which the condensate flows.

7. Heating installation according to Claim 6, characterised in that a material containing resin is used as the acid/base indicator, such as ion exchange resin (polystyrene resin) in combination with an indicator.

8. Heating installation according to Claim 6 or 7, characterised in that the indication container (31) is located on the upper side of the neutralisation container (23) and is anchored by a retaining nut (30).

9. Heating installation according to one of Claims 6 to 8, characterised in that a perforated wall (33) is located between the indication container (31) and the neutralisation container (23).

10. Heating installation according to one of Claims 1 to 9, characterised in that the neutralisation unit (22) is located on the outside of the heating installation and indeed on a plane which is deeper than the plane in which the evaporator of the heat pump (12) and an associated condensate collecting dish (21) lie.

**Revendications**

1. Installation de chauffage comportant une chaudière (10), en particulier pour chauffage à l'huile ou au gaz, et une pompe à chaleur (12), de l'évaporateur de laquelle sont envoyés les gaz brulés de la chaudière (10), un appareil de neutralisation (22) étant prévu, muni d'un récipient de neutralisation (23), qui contient, comme neutralisant (24), un oxyde de métal alcalinoterreux, le condensat à teneur en acide, formé sur l'évaporateur de la pompe à chaleur (12), étant amené à traverser ce récipient de neutralisation (23), caractérisée par le fait que le récipient de neutralisation (23) contient, comme neutralisant (24), de l'oxyde de magnésium, qu'un conduit de condensat (27) débouche dans le récipient de neutralisation (23) sur la face inférieure, que le condensat traverse de bas en haut le neutralisant (24) dans le récipient de neutralisation (23), et qu'un récipient collecteur (26) pour résidus est disposé sur la face inférieure du récipient de neutralisation (23).

2. Installation de chauffage selon la revendication 1, caractérisée par le fait que le récipient de neutralisation (23) est de forme oblongue et contient, dans sa zone inférieure, une réserve en neutralisant (24), notamment sous forme de morceaux ou de granulés, suffisante pour une période complète de chauffage.

3. Installation de chauffage selon la revendication 1 ou 2, caractérisée par le fait que le conduit de condensat (27) fait saillie vers le haut jusque dans le neutralisant (24) en traversant le fond du récipient de neutralisation (23).

4. Installation de chauffage selon l'une des revendications 1 à 3, caractérisée par le fait que le récipient collecteur (26) pour résidues est amovible et en forme de bec de trémie ouvert vers le bas et le conduit de condensat (27) pénètre dans le récipient collecteur (26) à la partie la plus profonde de celui-ci et atteint en le traversant, la zone du récipient de neutralisation (23).

5. Installation de chauffage selon l'une des revendications 1 à 4, caractérisée par le fait que le récipient collecteur (26) est séparé du récipient de neutralisation (23) par un fond perforé (25).

6. Installation de chauffage selon l'une des revendications 1 à 5, caractérisée par le fait que, sur la face de décharge de condensat de l'appareil de neutralisation (22), est disposé un indicateur pour résidus du condensat neutralisé, qui comporte avantageusement un récipient indicateur (31) à voyant ou paroi transparente, ainsi qu'un indicateur acide/base placé dedans, qui est parcouru par le condensat.

7. Installation de chauffage selon la revendication 6, caractérisée par le fait qu'est utilisée, comme indicateur acide/base, une matière résineuse, telle qu'une résine échangeuse d'ions (résine polystyrène), en combinaison avec un indicateur.

8. Installation de chauffage selon la revendication 6 ou 7, caractérisée par le fait que le récipient indicateur (31) est monté sur la face supérieure du récipient de neutralisation (23) et ancré avec un écrou-chapeau (30).

9. Installation de chauffage selon l'une des revendications 6 à 8, caractérisée par le fait qu'entre le récipient indicateur (31) et le récipient de neutralisation (23) est placée une cloison perforée (33).

10. Installation de chauffage, selon l'une des revendications 1 à 9, caractérisée par le fait que l'appareil de neutralisation (22) est monté à l'extérieur de l'installation de chauffage, et ce, sur un plan qui est plus bas que le plan dans lequel se trouvent l'évaporateur de la pompe à chaleur (12) et une cuvette de collecte de condensat associée (21).

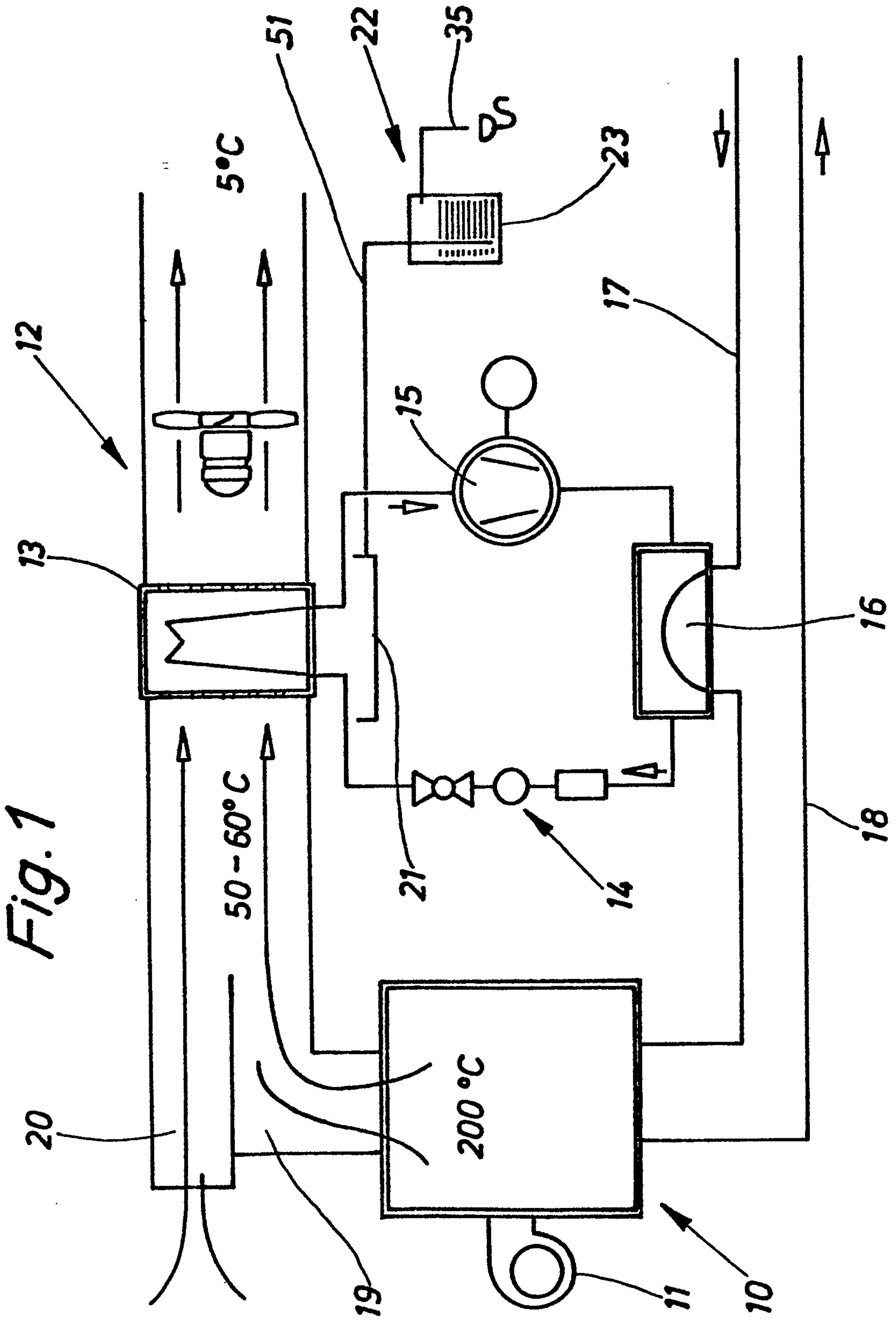


Fig. 1

Fig. 2

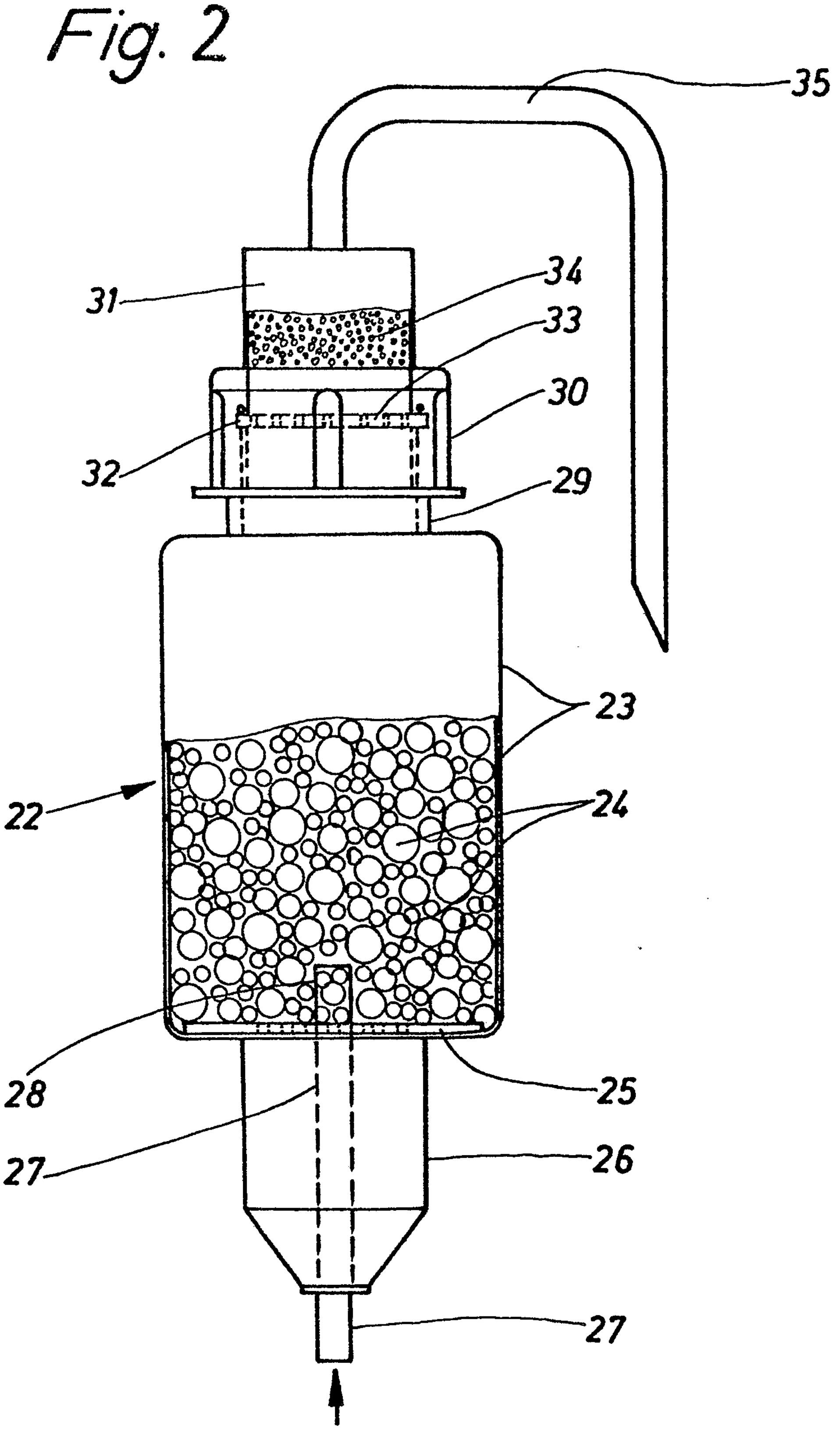

Fig. 3

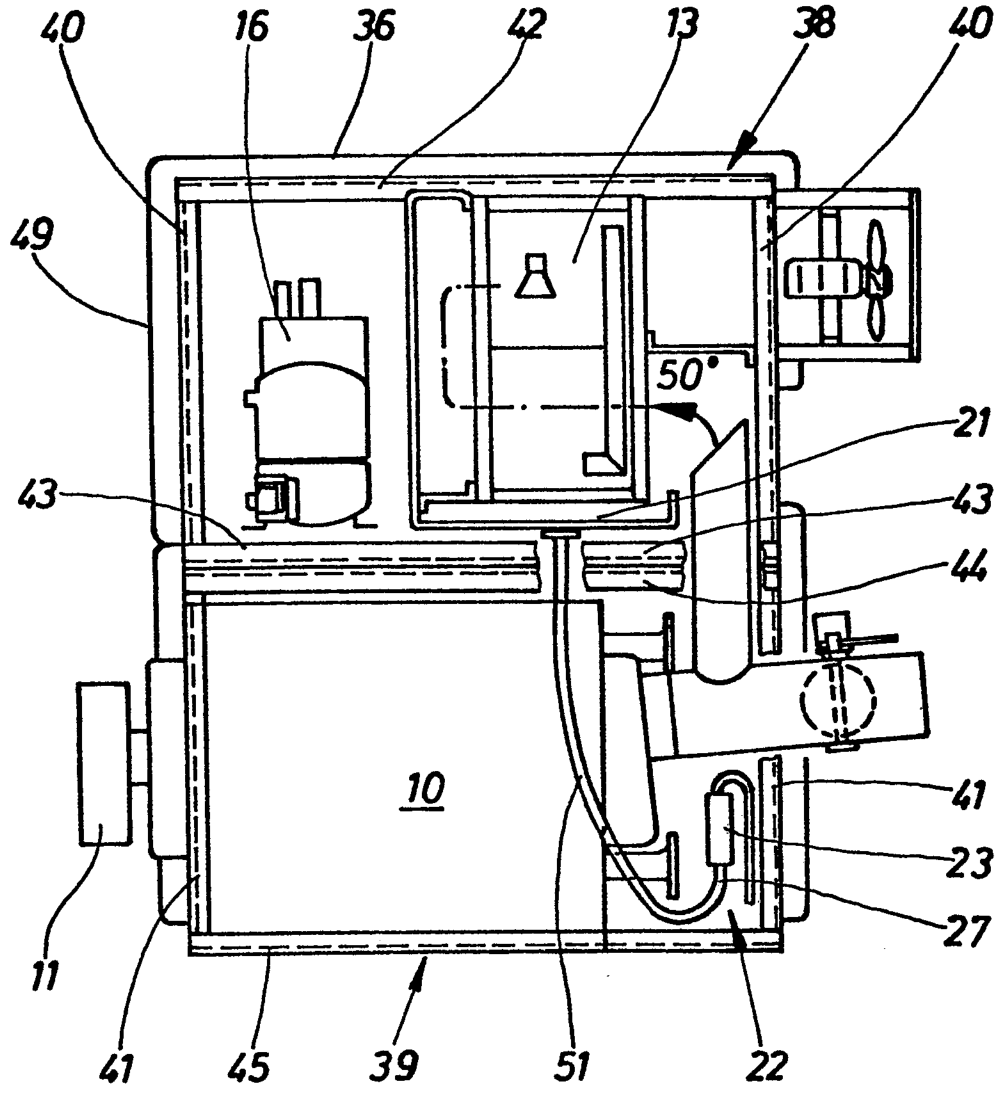

Fig. 4

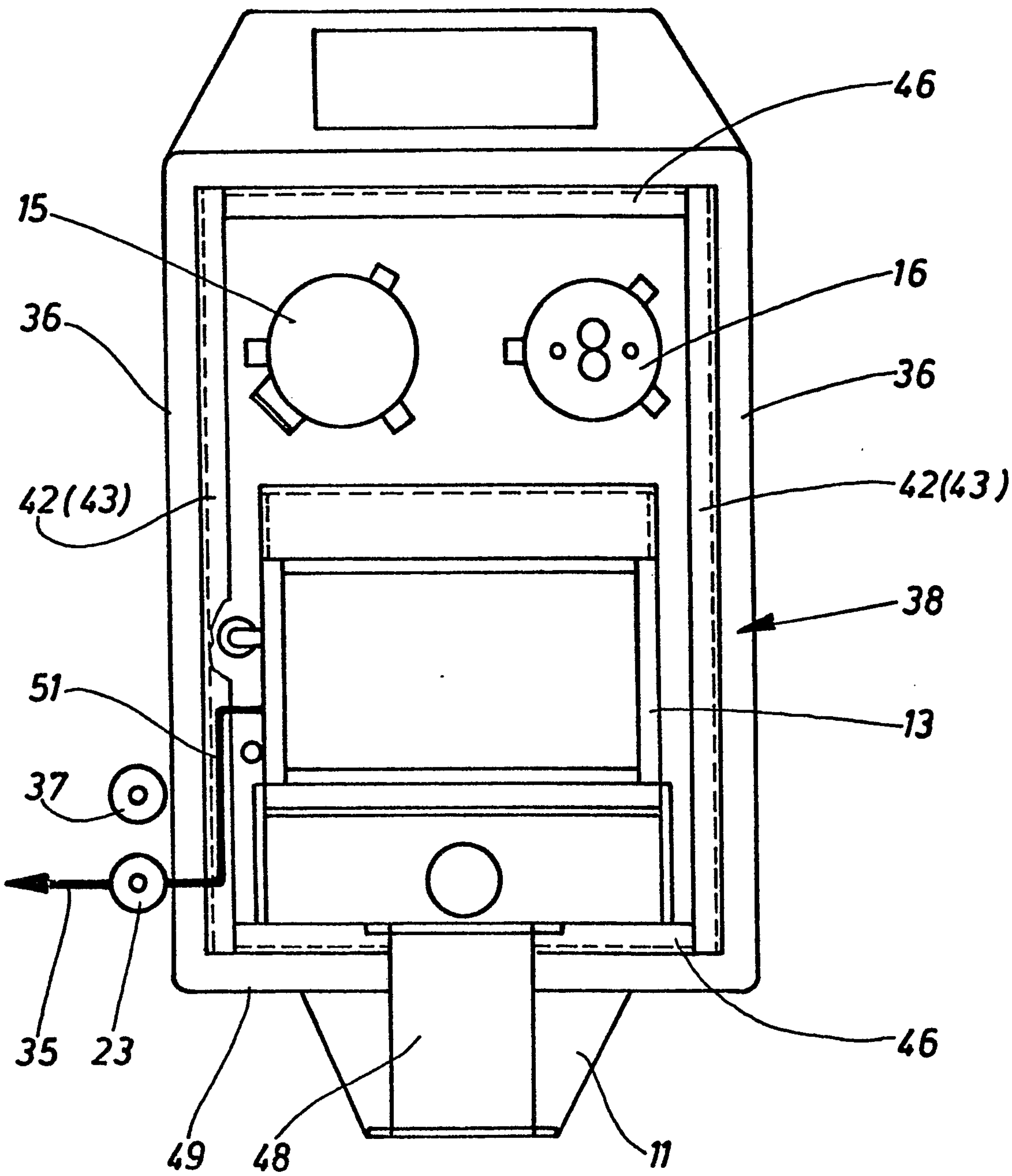

Fig. 5

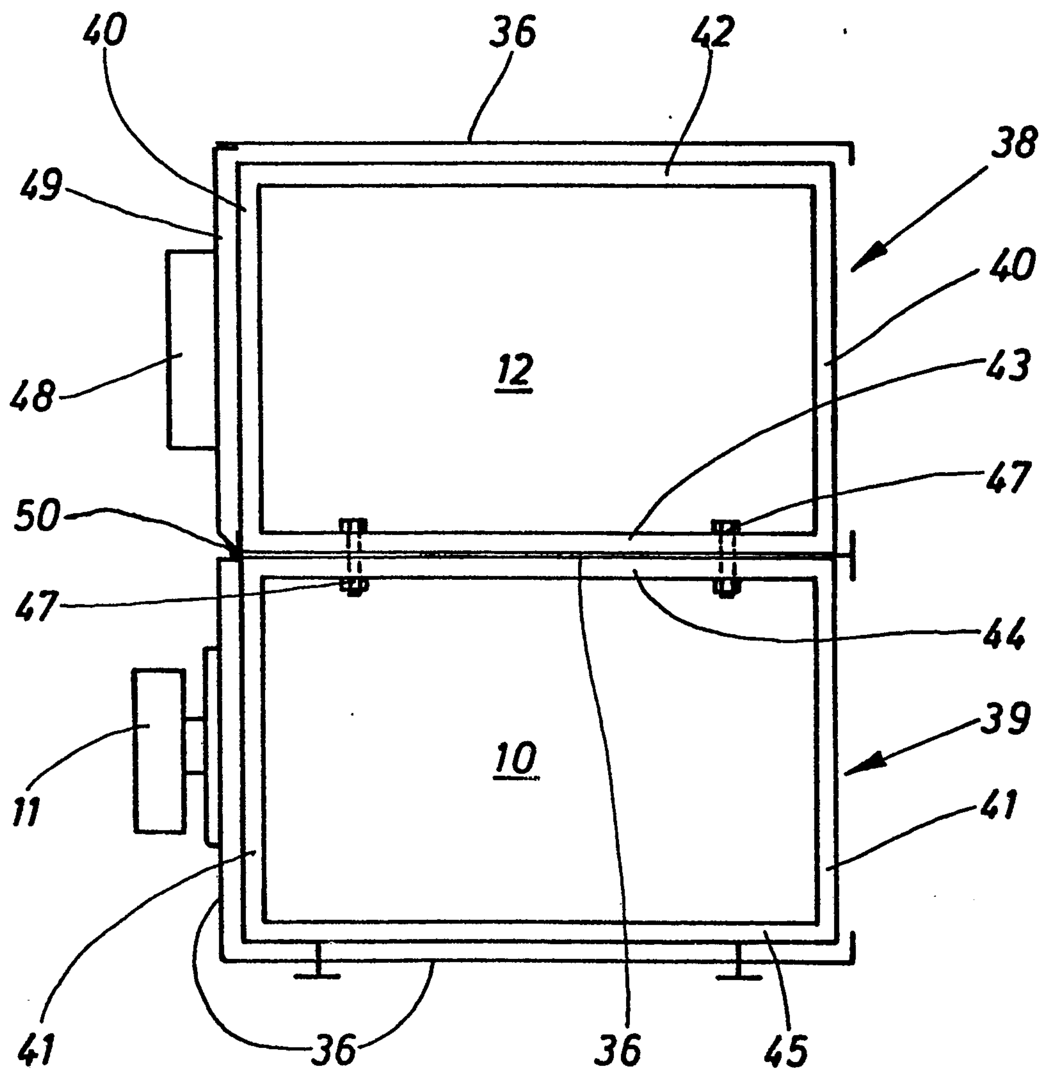

Fig. 6